# EUROPEAN PATENT SPECIFICATION

(11) **EP 0 456 610 B1**
(45) Date of publication and mention of the grant of the patent: **25.01.1995**
(21) Application number: 91810334.2
(22) Date of filing: 30.04.1991
(51) Int. Cl.: C09B 67/20, C08G 12/32

(54) **A process for the manufacture of pigments**
Ein Verfahren zur Herstellung von Pigmenten
Un procédé pour la fabrication des pigments

(30) Priority: 11.05.1990 FR 9005910
(43) Date of publication of application: 13.11.1991
(73) Proprietor: SOCIETE NOUVELLE DE CHIMIE INDUSTRIELLE S.A., F-74490 Saint-Jeoire-en-Faucigny (FR)
(72) Inventor: Marcq, Michel Jean, F-74440 Taninges (FR)
(74) Representative: Szele, Ivanka

(56) References cited:
- EP-A- 0 355 760
- FR-A- 2 089 620
- FR-A- 2 253 794
- GB-A- 980 583
- GB-A- 1 341 602

## Description

The present invention relates to pigments, and more particularly to fluorescent pigments, and to a process and a device for their manufacture.

It is known that when coloured substances are subjected to polychromatic radiation such as, for example, daylight, they have the property of reflecting, transmitting or scattering only certain wavelengths and of absorbing the remainder of the luminous energy, which is dissipated by nonradiative processes. So-called daylight-fluorescent substances have the additional property of converting a proportion of the radiation absorbed at the blue end of the visible spectrum and in the near UV into light which is reemitted at longer wavelengths, also situated in the visible spectrum and equal to those of the light which these substances do not absorb. Through this process, they are capable of producing in the observer's eye an impression of colour and of brightness which is up to four times greater than that of ordinary coloured substances of the same colour. It is also known that the intensity of the emitted fluorescent light is extremely sensitive to so-called fluorescence extinction phenomena and that it is a function especially of the concentration of the fluorescent substance itself (autoextinction phenomenon) and of the possible presence of other substances known as fluorescence inhibitors (which act, for example, by reabsorbing the emitted light or by nonradiative quantum deexcitation processes).

In most applications of colourants (for example paper coating, textile printing, plastic coatings) the colourant molecules must be prevented from migrating, diffusing or redissolving in a solvent. In the case of fluorescent colourants, furthermore, the fluorescence intensity is at a maximum (low autoextinction) in a precise concentration range and, if the other causes of extinction of fluorescence are to be limited, the colourant matter must be protected in an inert but transparent optical medium. A rigid polymer matrix in which the colourant molecule is soluble (solid solution) or dispersible meets these requirements of isolation, confinement and immobilisation. These coloured polymers are employed in most cases in the form of finely ground particles, generally referred to as pigments.

The polymers employed for manufacturing fluorescent pigments belong to the classes of thermoplastic and thermosetting resins. Among those most commonly employed are aminoplastic resins resulting from the polycondensation of triazines, amines and formaldehyde. Other polymers, such as polyesters, polyamides and polyurethanes and polyvinyl chlorides can also form the carrier for colourant molecules. Depending on the degree of crosslinking obtained during the polymerisation, these resins are either thermoset or thermoplastic. Thermoset resins are employed in cases where good resistance to solvents and to plasticisers is required (absence of swelling and of colourant diffusion) and when softening under the effect of heat could create problems. In most cases these pigments consist of a solid solution of colourants in a melamine-formaldehyde-sulfonamide resin.

In known processes for the manufacture of these thermoset resins the above mixture is polycondensed in bulk, in noncontinuous batches. Such processes are described e.g. in US 3,939,093, in GB 1,341,602 or in US 3,812,051. On average the reaction takes 2 hours, per batch, in the reactor. After complete polymerisation a hard, tough solid is obtained, whose texture often resembles that of horn. This solid must be taken out of the polymerisation reactor as a block. This can prove difficult and it is often preferred to complete the reaction by casting the reacting mass, which is still pasty, into troughs and finishing the polymerisation in an oven. The blocks are then crushed and then micronised. The micronisation of this solid presents some difficulties: it requires a pregrinding before a fine microniser is fed, it being necessary for the two items of equipment to be cleaned after each batch. Such conventional processes for the manufacture are also described in Chem. Brit., 335(1977). The US 3,972,849 proposes the use of known grinding equipment, such as a ball mill, in an attempt to avoid the dissadvantages of the conventional manufacturing process.

The inconvenience of the conventional manufacturing processes and the disadvantages of the pigment particles obtained by these processes have led some manufactures, on the other hand, to prefer the manufacture and the use of pigments based on thermoplastic resins each time that a high solvent and temperature resistance is not essential. US 2,809,954, GB 869,801 and GB 980,583 describe the synthesis of pigments based on thermoplastic resins. These fusible, and hence heat-sensitive, resins do not lend themselves well to simple micronising by milling and hence to the manufacture of pigments of a fine and well-determined particle size. These resins generally require an additional stage of manufacture (dispersion, phase separation) to obtain pigment particles of well-determined particle size, which is described, for example, in US 3,642,650 and 3,412,034.

The disadvantages of the two types of processes described above are avoided in the manufacture of amide (urea, melamine, and the like)/formaldehyde condensates of low molecular weight, to which the colourant is attached by affinity. Such a process is described in GB 748,484. However, the applications of such pigments are in practice limited to inks and paints, because the colourant molecules are bound to the condensates only by affinity.

The objective of the present invention is to manufacture pigments comprising a coloured composition incorporated in a resin which isolates, confines and immobilises the coloured composition, which pigments withstand the action of heat or of solvents, while avoiding the disadvantages of the processes of the prior art and especially the crushing and the difficulties of micronisation.

This objective is attained by a process for the manufacture of pigments, comprising a coloured composition incorporated in a crosslinked thermoset resin by continuous bulk polycondensation of the reaction mixture, wherein (a) the coloured composition, (b) at least one component A chosen from aromatic sulfonamides containing 2 hydrogens bonded to the nitrogen of the sulfonamide group, (c) at least one component B chosen from substances containing 2 or more NH₂ groups, each of the said NH₂ groups being bonded to a carbon, the said carbon being bonded by a double bond to an =O, =S or =N-, and (d) at least one aldehyde component C, are introduced continuously into an extruder at a temperature between 105°C and 190°C, the mixture is caused to travel forward in the extruder, at the end of reaction the mixture is withdrawn continuously from the extruder, and is deposited continuously onto a conveyor belt, broken up into thermoset flakes, and cooled, said conveyor belt having means for cooling and means for detaching the said flakes from the said belt.

A continuous process for the production of aqueous melamine-formaldehyde-precondensate solutions is described in the EP-A 355,760. This publication, however, neither discloses a continuous bulk polycondensation, nor the use of component A or of colourants as described in the instant application.

Among the substances capable of forming the component A according to the present invention, there will be mentioned especially benzenesulfonamide and benzenesulfonamide derivatives of general formula: 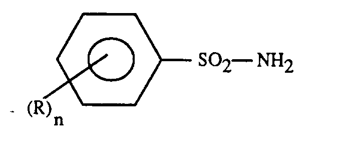
where the groups R are hydrogen or alkyl groups. A particularly preferred substance A is para-toluenesulfonamide, ortho-Toluenesulfonamide, or mixtures of aromatic sulfonamides, such as mixtures of ortho- and para-toluene-sulfonamide (e.g. a 50:50 mixture of these components), can also be employed and are available on the market. C₁-C₄alkyl-benzenesulfonamides, e.g. are also available commercially.

Among the substances which can be employed as component B according to the present invention there will be mentioned especially urea (NH₂CONH₂), thiourea (NH₂CSNH₂), guanidine (NH₂)₂CNH, carbamylurea (C₂H₅N₃O₂), succinamide (C₄H₈N₂O₂), among the noncyclic compounds; among cyclic compounds and more particularly among nitrogenous heterocyclic rings there will be mentioned the molecules containing a plurality of NH₂ groups, each of these groups being bonded to a carbon of a heterocyclic ring, the said carbon being linked by a double bond to a nitrogen of the heterocyclic ring; these heterocyclic rings include the triazole, diazine, triazine and pyrimidine nuclei; there will be mentioned in particular the guanamine derivatives of general formula: 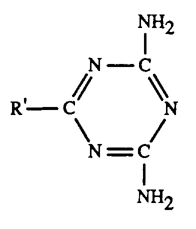
where R' is hydrogen, an aliphatic radical, an aromatic radical, a saturated or unsaturated cycloaliphatic or alkoxyaryloxy radical. Benzoguanamine may be mentioned among the preferred compounds B.

A compound B which is particularly preferred when it is intended to obtain a thermoset resin is melamine (where R' is NH₂). Diguanamines and triguanamines (whose synthesis from the corresponding nitriles and from dicyanodiamide is known, furthermore), or mixtures of the above substances can also be employed as component B according to the present invention, as well as the particular triazine compounds described in the US 3,838,063. A certain amount of the component B according to the invention may be replaced by an isocyanuric ring containing compound, such as isocyanuric acid or its alkyl or aryl esters, respectively; pigment compositions comprising such resins are disclosed in US 3,620,993.

The aldehyde or the mixture of aldehydes forming the component C according to the present invention are formaldehyde, acetaldehyde, propionaldehyde (higher aldehydes can be employed but do not offer any particular advantage within the meaning of the present invention). A particularly preferred compound is paraformaldehyde (CH₂O)ₙ, because of its ease of use.

The pigments according to the invention comprise preferably at least one substance which is fluorescent in daylight, the preferred concentration of said substance being between 1 % and 5 % by weight of the pigments.

Colourants capable of forming a solid solution in a resin and capable of fluorescing in daylight are furthermore known and are, in general, listed in the Colour Index. Rhodamines, coumarines, xanthenes and naphthalimides will be mentioned by way of example, no limitation being implied. Examples of appropriate colourants are also compounds described in GB 1,341,602, US 3,939,093 and US 3,812,051.

The present invention is particularly adapted to the manufacture of daylight fluorescent pigments, that is to say pigments whose coloured composition comprises one or more substances which are fluorescent in daylight and/or optionally one or more common coloured substances. However, it is not limited to pigments of this type: by including in a resin according to the invention a compound which does not absorb in the visible but which fluoresces when it is excited by UV radiation, "transparent" pigments are obtained, which can be employed for particular applications such as invisible inks.

The pigments of the invention are suitable for a wide variety of applications, such as paper coating, textile printing, preparation of paints, plastisols, pastes, inks, markers or cosmetics.

The present invention also makes it possible to manufacture common, nonfluorescent coloured pigments.

The concentration of the fluorescent substances in the mixture which is to be polymerised and crosslinked may be adjusted so that the intensity of fluorescence is maximised. After polymerisation and micronisation the local microconcentration of fluorescent substances dissolved in the polymeric matrix remains constant whatever the subsequent overall dilution of the pigment powder, according to its use.

In the process according to the present invention the melamine concentration, which is preferably between approximately 13 % and 40 % by weight, of the weight of sulfonamide component A in the reaction mixture, can be taken to values which are markedly higher than those employed in the processes for the manufacture of thermoplastic resins. The concentration of component C in the mixture is preferably between 27 % and 40 % by weight of the sulfonamide.

A harder and more brittle material is thus obtained, which lends itself better to micronisation and which withstands better the action of heat and of solvents. In the case where the amine chosen as component B is melamine, a decrease in the cost of manufacture is also obtained when the proportion of B is increased, given the low cost of this product. The decrease in the cost of manufacture of the pigments according to the present invention also results generally from the replacement of processes using noncontinuous batches by a continuous reaction process. Surprisingly, it is therefore possible using this process according to the invention to obtain a thermoset resin.

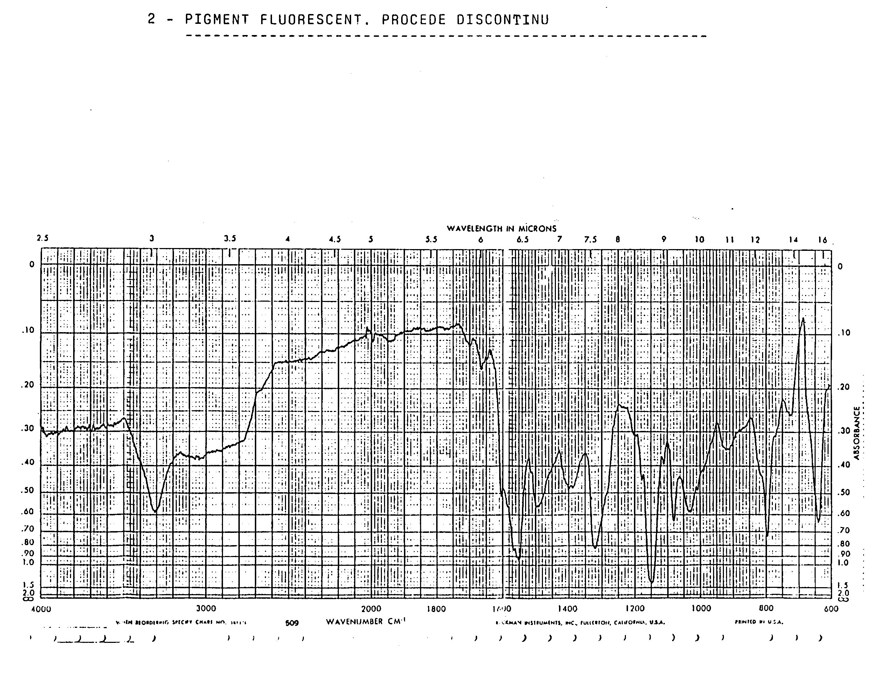

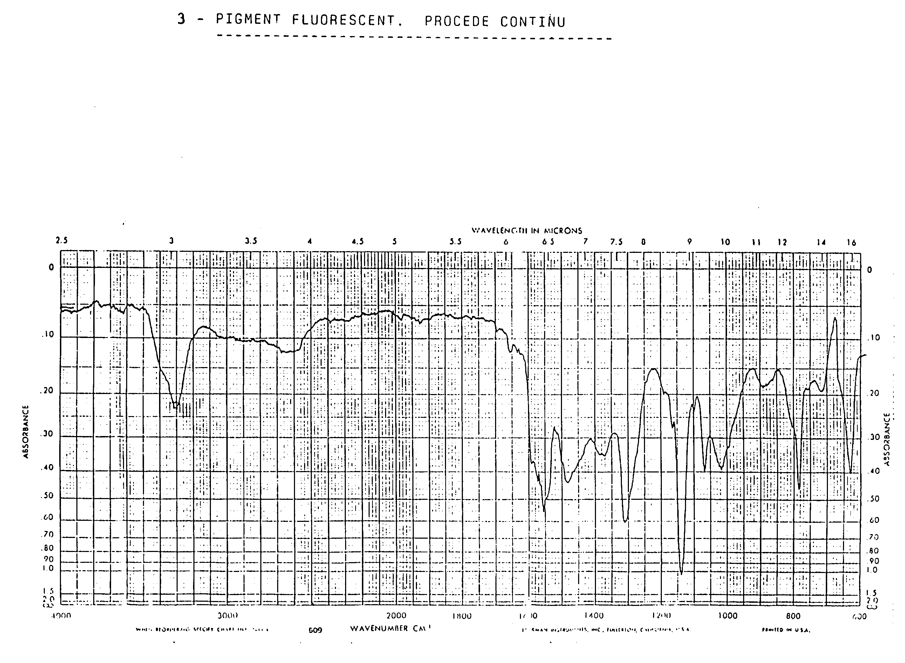

IR spectrometry analysis of samples of crosslinked resin obtained according to the present invention (Fig. 3), when compared with a resin of the same initial composition, obtained by noncontinuous polycondensation according to the prior art (Fig. 2), shows differences in the absorption bands which are characteristic of these crosslinked structures (see Figures 2 and 3, in particular the 2500-3400 cm⁻¹ region), and hence differences in the polymeric structures.

The continuous polycondensation process is carried out in a particularly convenient and simple manner, wherein the coloured composition, the component A, the component B and the component C are introduced continuously into a reactor, are melted and mixed, the mixture travels forward in the reactor and at the end of reaction the mixture is continuously withdrawn in a pasty state from the said reactor. The residence time of the mixture in the reactor is less than 10 min; on average it is 3-4 minutes.

This process period which is short, when compared with the processes of the prior art (several hours, including stoving) offers the additional advantage of making it possible to include in the resin matrix heat-sensitive coloured substances and compositions (on condition that they withstand being heated to the reaction temperature for a few minutes), which would have been destroyed in the processes of the prior art.

Another advantage of the process according to the present invention is that it is possible to cast or drop the mixture at the end of reaction onto a conveying device on which it breaks up, cools and forms thermoset flakes, and this makes it possible to do without a stage of crushing a solidified reaction mass. The flakes thus formed can be easily detached from the conveying device and are easy to micronise after cooling. The flakes are preferably micronised to a particle size of between 0.5 and 20 »m. The particularly preferred mean particle size is between 3 and 7 »m. In a particularly preferred manner use is made of an extruder whose endless screw is responsible both for mixing the components and propelling the reaction mixture in the reactor, and also for its extrusion. It is particularly advantageous to recover the reaction mixture at the outlet of the extruder on a conveyor belt which is cooled by air or by water. The mixture leaving the extruder in the form of a pasty lace breaks up on the conveyor belt into droplets which spread and cool, forming flakes. At the other end of the conveyor belt these flakes are easily detached from the belt and are taken to the micronisation.

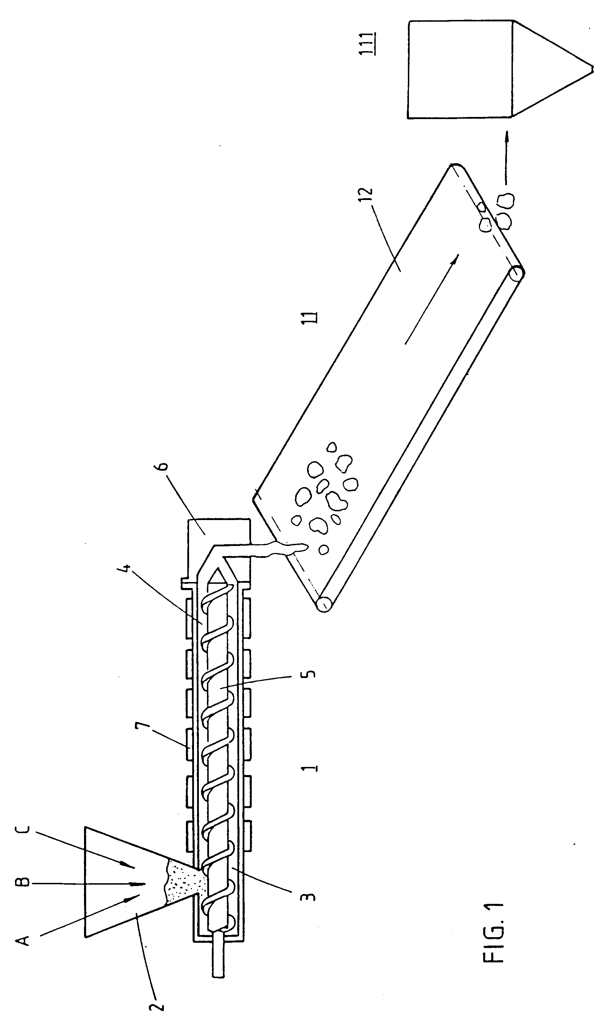

The characteristics and the advantages of the present invention will be understood better with the aid of the process diagram (Fig. 1) and of the examples below.

### Example 1: Manufacture of coloured mixtures

A range of shades extending from yellow to orange shades and to red can be produced by mixing e.g. the following colourants, listed in the Colour Index:
Solvent yellow 43
Solvent yellow 44 (C. I. No. 56200)
Solvent yellow 172
Basic red 1 (rhodamine, C. I. No. 45160)
Basic violet 10 (rhodamine, C. I. No. 45170)
Basic blue 7 (C. I. No. 42595)
Pigment green 7 (C. I. No. 74260).

Pinks and mauves can be produced from rhodamine mixtures; in the case of mauve, the latter may be obtained e.g. by tinting basic violet 10 with basic blue (in small quantity, to minimise the fluorescence extinction). Green shades can be obtained with the aid of e.g. pigment green 7 and of yellow colourants.

A fluorescent whitening agent may be added.

These coloured mixtures are incorporated as a powder in a proportion of 10 to 20 % in melamine.

### Example 2: Manufacture of coloured flakes

A mixture comprising, by weight, 57 % of para-toluenesulfonamide, 25 % of paraformaldehyde and 15 % of melamine (filled with 3 %, relative to the total mixture, of yellow 43 colourant) is introduced (overall flow rate 30 kg/hour) via the feed hopper (2) of an extruder (1) of coaxial type. The internal temperature of the compression zone (3) and of the extrusion zone (4) of the extruder are maintained at 175°C (heater elements 7). The components of the reaction mixture are mixed with the aid of an extrusion screw (5) with a cylindrical core, which propels them through the compression zone. The average residence time, from the feed hopper to the extrusion head, is 2′ 30˝. An extrusion head (6) for solid beam profiles can be employed. The extruded pasty lace falls, breaking up, onto a conveyor (11) with a water-cooled endless belt (12). The resin forms flakes on the belt and has set when it reaches its end.

### Example 3: Flake micronisation

The flakes recovered at the end of the belt are fed into a mill (111) of the air jet microniser type.

The operating conditions are: dry air at 7 bars, room temperature, 25 kg/hour flow rate.

The table below gives the particle sizes of the pigments obtained.

| Colourant name | Average | Standard deviation |
|---|---|---|
| Fuchsia pink | 4.7 »m | 3.3 »m |
| Fire orange | 5.2 »m | 3.4 »m |
| Yellow | 5.3 »m | 4.0 »m |
| Green | 5.4 »m | 3.7 »m |

For all these samples more than 99 % of the micronised material is between 0.9 and 14 »m in particle size.

Example 4: According to the process of example 2, a fluorescent pink pigment is prepared from a mixture having 70 % by weight of para-toluene sulfonamide, 18 % by weight of paraformaldehyde, 9 % by weight of melamine (dyed by 1.5 % by weight of basic red 1 and 1.5 % by weight of basic violet 10, the amount of colourant being relative to the total mixture).

By means of a latex (latex BASF SD 215®), a fluorescent pigment composition is prepared to be used for coating paper comprising:
25 parts of pink fluorescent pigment
25 parts of Carbital 95®
25 parts of latex BASF SD 215®
25 parts of of water
A fluorescent pink coated paper is obtained.

Example 5: A fluorescent pink pigment composition called masterbatch (cylindrical granulate forms - length: 5 mm-diameter: 2 mm) is obtained by including 35 g of pink fluorescent pigment of example 4 in 65 g of a polyvinyle chloride mixture composed of 55 % of polyvinyle chloride, 31 % of dioctyl phthalate and 2 % of an organo-tin stabilizer, and passing said mixture through an extruder at 125°C. The filaments obtained are cooled at room temperature and passed through a grind-mill.

The above examples are given merely by way of illustration. Other devices and operating conditions can be employed by a person skilled in the art without departing from the continuous polymerisation process forming the subject of the present invention.

## Claims

1. A process for the manufacture of pigments, comprising a coloured composition incorporated in a crosslinked thermoset resin by continuous bulk polycondensation of the reaction mixture, wherein
(a) the coloured composition,
(b) at least one component A chosen from aromatic sulfonamides containing 2 hydrogens bonded to the nitrogen of the sulfonamide group,
(c) at least one component B chosen from substances containing 2 or more NH₂ groups, each of the said NH₂ groups being bonded to a carbon, the said carbon being bonded by a double bond to an =O, =S or =N-, and
(d) at least one aldehyde component C,
are introduced continuously into an extruder at a temperature between 105°C and 190°C, the mixture is caused to travel forward in the extruder, at the end of reaction the mixture is withdrawn continuously from the extruder, and is deposited continuously onto a conveyor belt, broken up into thermoset flakes, and cooled, said conveyor belt having means for cooling and means for detaching the said flakes from the said belt.

2. A process according to claim 1, wherein the said coloured composition comprises at least one substance which is fluorescent in daylight and the concentration of the said fluorescent substance is between 1 % and 5 % by weight of the pigments.

3. A process according to claim 1, wherein the said coloured composition comprises a substance which is fluorescent when it is excited by UV radiation, but which does not absorb in the visible spectrum.

4. A process according to claim 1, wherein the concentration of the component B is between 13 % and 40 % by weight of the component A and the concentration of component C is between 27 % and 40 % by weight of the component A.

5. A process according to claim 1, wherein the said flakes are micronised after cooling.

6. A process according to claim 5, wherein the said flakes are micronised to a particle size of between 0.5 and 20 »m.

7. A process according to claim 6, wherein the said flakes are micronised to a mean particle size of between 3 and 7 »m.

8. A process according to claim 1, wherein the said extruder has at least one endless screw capable of propelling a pasty mixture.

9. A mass-coloured plastics material, paper sheet or textile which contains or is coated with a pigment prepared according to the process of claim 1.

10. A printing ink, paint or lacquer or a paste or plastisol which contains a pigment prepared according to the process of claim 1.

## Patentansprüche

1. Verfahren zur Herstellung von Pigmenten, die eine gefärbte Zusammensetzung, eingearbeitet in einem vernetzten duroplastischen Harz durch kontinuierliche Masse-Polykondensation des Reaktionsgemisches, umfassen, wobei
(a) die gefärbte Zusammensetzung,
(b) wenigstens eine Komponente A, ausgewählt unter aromatischen Sulfonamiden, die zwei Wasserstoffe gebunden an den Stickstoff der Sulfonamidgruppe enthalten,
(c) wenigstens eine Komponente B, ausgewählt unter Substanzen, die zwei oder mehr NH₂-Gruppen enthalten, von denen jede der NH₂-Gruppen an ein Kohlenstoff gebunden ist, wobei der Kohlenstoff durch eine Doppelbindung an =O, =S oder =N gebunden ist, und
(d) wenigstens eine Aldehydkomponente C
kontinuierlich in einen Extruder bei einer Temperatur zwischen 105° C und 190° C eingeführt werden, wobei das Gemisch im Extruder vorwärts bewegt wird, und am Ende der Reaktion das Gemisch kontinuierlich aus dem Extruder abgezogen wird und kontinuierlich auf einem Förderband abgelagert wird, zu Duroplastschuppen gebrochen und abgekühlt wird, wobei das Förderband Einrichtungen zum Abkühlen und Einrichtungen zur Abnahme der Schuppen von dem Band hat.

2. Verfahren nach Anspruch 1, worin die gefärbte Zusammensetzung wenigstens eine Substanz umfaßt, die bei Tageslicht fluoresziert und wobei die Konzentration der Fluoreszenzsubstanz zwischen 1 Gewichts-% und 5 Gewichts-% der Pigmente liegt.

3. Verfahren nach Anspruch 1, worin die gefärbte Zusammensetzung eine Substanz umfaßt, die fluoresziert, wenn sie UV-Strahlung ausgesetzt ist, die jedoch nicht im sichtbaren Spektrum absorbiert.

4. Verfahren nach Anspruch 1, worin die Konzentration der Komponente B zwischen 13 Gewichts-% und 40 Gewichts-% der Komponente A beträgt, und die Konzentration der Komponente C zwischen 27 Gewichts-% und 40 Gewichts-% der Komponente A beträgt.

5. Verfahren nach Anspruch 1, worin die Schuppen nach der Abkühlung mikronisiert werden.

6. Verfahren nach Anspruch 5, worin die Schuppen auf eine Teilchengröße zwischen 0,5 und 20 »m mikronisiert werden.

7. Verfahren nach Anspruch 6, worin die Schuppen auf eine mittlere Teilchengröße zwischen 3 und 7 »m mikronisiert werden.

8. Verfahren nach Anspruch 1, worin der Extruder wenigstens eine Endlosschnecke hat, die zum Vorantreiben eines pastösen Gemisches in der Lage ist.

9. Massegefärbtes plastikmaterial, Papierbögen oder Textilien, die mit einem Pigment überzogen sind oder es enthalten, das nach dem Verfahren von Anspruch 1 hergestellt wurde.

10. Druckfarbe, Farbe oder Lack oder Paste oder Plastisol, die/das ein Pigment enthält, das nach dem Verfahren von Anspruch 1 hergestellt wurde.

## Revendications

1. Procédé de préparation de pigments, comprenant une composition colorée incorporée à une résine thermodurcie réticulée par une polycondensation continue en vrac du mélange réactionnel, dans lequel
(a) la composition colorée,
(b) au moins un composant A choisi parmi les sulfonamides aromatiques contenant 2 atomes d'hydrogène liés à l'azote du groupe sulfonamide,
(c) au moins un composant B choisi parmi les substances contenant 2 ou plusieurs groupes NH₂, chacun desdits groupes NH₂ étant lié à un atome de carbone, ledit atome de carbone étant lié par une double liaison à un =O, =S ou =N-,et
(d) au moins un composant aldéhyde C
sont introduits en continu dans une extrudeuse à une température entre 105°C et 190°C, le mélange étant entraîné à travers l'extrudeuse et le mélange étant soutiré en continu de l'extrudeuse à la fin de la réaction et étant déposé en continu sur une courroie transporteuse, brisé en paillettes thermodurcies et refroidies, ladite courroie transporteuse comportant des moyens pour refroidir et des moyens pour détacher lesdites paillettes de ladite courroie.

2. Procédé selon la revendication 1, dans lequel ladite composition colorée comprend au moins une substance fluorescente à la lumière du jour et dont la concentration est comprise entre 1% et 5% en poids des pigments.

3. Procédé selon la revendication 1, dans lequel ladite composition colorée comprend une substance fluorescente par excitation par les rayons ultraviolets mais n'absorbant pas dans le spectre visible.

4. Procédé selon la revendication 1, dans lequel la concentration du composant B est comprise entre 13% et 40% en poids du composant A et la concentration du composant C est comprise entre 27% et 40% en poids du composant A.

5. Procédé selon la revendication 1, dans lequel lesdites paillettes sont micronisées après refroidissement.

6. Procédé selon la revendication 5, dans lequel lesdites paillettes sont micronisées jusqu'à une taille des particules comprise entre 0,5 et 20 »m.

7. Procédé selon la revendication 6, dans lequel lesdites paillettes sont micronisées jusqu'à une taille moyenne des particules comprise entre 3 et 7 »m.

8. Procédé selon la revendication 1, dans lequel ladite extrudeuse comprend au moins une vis sans fin capable de faire avancer un mélange pâteux.

9. Matière plastique, feuille de papier ou textile colorés dans la masse, contenant ou enduits par un pigment préparé selon le procédé de la revendication 1.

10. Encre d'imprimerie, teinture, laque, pâte ou plastisol contenant un pigment préparé par le procédé de la revendication 1.
